# EUROPÄISCHE PATENTANMELDUNG

(11) **EP 3 112 236 A1**
(43) Veröffentlichungstag der Anmeldung: **04.01.2017**
(21) Anmeldenummer: 16173699.6
(22) Anmeldetag: 09.06.2016
(51) Int. Cl.: B61D 17/00

(54) **FANGHAKEN SOWIE FANGHAKENEINHEIT, INSBESONDERE FÜR EIN FAHRZEUG**

(30) Priorität: 01.07.2015 DE 102015212315
(71) Anmelder: Siemens Aktiengesellschaft, 80333 München (DE)
(72) Erfinder: Baumann, Thomas, 97084 Würzburg (DE); Kaiser, Simon, 90489 Nürnberg (DE)

(57) **Zusammenfassung**

Fanghaken für ein bewegliches Teil, insbesondere ein Verschluss- oder Abdeckelement (20). Erfindungsgemäß ist vorgesehen, dass der Fanghaken (100) ein Blechbiegeteil ist.

## Beschreibung

Die Erfindung betrifft Fanghaken, Fanghakeneinheiten sowie Fahrzeuge, insbesondere Schienenfahrzeuge, die mit Fanghaken bzw. Fanghakeneinheiten ausgestattet sind.

Schienenfahrzeuge des Typs ICE sind heutzutage mit Fanghaken bzw. Fanghakeneinheiten ausgestattet, die ein Herunterfallen von Verschluss- oder Abdeckelementen im Rahmen von Wartungs- oder Reparaturarbeiten verhindern sollen. Beim Abnehmen eines Verschluss- oder Abdeckelements rastet in einer ersten Phase der Fanghaken ein und verhindert ein weiteres Wegbewegen des Verschluss- oder Abdeckelements; erst nach einem absichtlichen manuellen Entriegeln des Fanghakens kann in einer zweiten Phase das Verschluss- oder Abdeckelement vollständig abgenommen werden. Die Fanghaken sind bei den Schienenfahrzeugen des Typs ICE durch Strangpressprofile gebildet und dadurch relativ kostenaufwändig. Die Anordnung und Lagerung der Strangpressprofile ermöglicht außerdem ein relativ weites Verschwenken, so dass es zu einer Fehlstellung der Fanghaken bei der Montage und/oder bei der späteren Bedienung sowie damit einhergehend zu einer Beschädigung des Verschluss- oder Abdeckelements und/oder derjenigen Teile kommen kann, die durch das Verschluss- oder Abdeckelement verschlossen oder abgedeckt werden sollen.

Der Erfindung liegt die Aufgabe zugrunde, für ein bewegliches Teil, insbesondere ein Verschluss- oder Abdeckelement, einen verbesserten Fanghaken anzugeben.

Diese Aufgabe wird erfindungsgemäß durch einen Fanghaken mit den Merkmalen gemäß Patentanspruch 1 gelöst.

Erfindungsgemäß ist vorgesehen, dass der Fanghaken durch ein Blechbiegeteil gebildet ist. Ein wesentlicher Vorteil des erfindungsgemäßen Fanghakens liegt in seiner besonders kostengünstigen Produktionsmöglichkeit.

Die Erfindung bezieht sich darüber hinaus auf eine Fanghakeneinheit. Erfindungsgemäß ist bezüglich einer solchen Fanghakeneinheit vorgesehen, dass die Fanghakeneinheit einen erfindungsgemäßen Fanghaken sowie eine Halteeinrichtung aufweist, die zur Montage an einem beweglichen Teil, insbesondere einem Verschluss- oder Abdeckelement, geeignet ist, und der Fanghaken von der Halteeinrichtung schwenkbar gehalten wird. Bezüglich der Vorteile der erfindungsgemäßen Fanghakeneinheit sei auf die obigen Ausführungen im Zusammenhang mit dem erfindungsgemäßen Fanghaken verwiesen.

Als besonders vorteilhaft wird es angesehen, wenn der Fanghaken von der Halteeinrichtung derart schwenkbar gehalten wird, dass er allein schwerkraftbedingt seine Arbeitsposition bzw. eine zum Einhaken in ein Gegenstück der Fanghakeneinheit geeignete Fangstellung einnimmt. Bei dieser Ausgestaltung wird allein durch das Ausnutzen der Schwerkraft sichergestellt, dass der Fanghaken stets die richtige Position für die Gewährleistung seiner Hakenfunktionalität aufweist. Auf das Vorsehen zusätzlicher Federn, die zum Ausrichten des Fanghakens dienen, kann somit verzichtet werden.

Bezüglich der Ausgestaltung der Halteeinrichtung wird es als besonders vorteilhaft angesehen, wenn diese ein zur Montage an dem beweglichen Teil geeignetes Halteelement und ein an dem Halteelement angebrachtes Achsenelement aufweist, das eine Schwenkachse für den Fanghaken bildet.

Vorzugsweise handelt es sich bei dem Halteelement um ein mehrfach gebogenes Blechbiegeteil. Wie bereits erwähnt, lassen sich Blechbiegeteile sehr kostengünstig herstellen.

Um zu gewährleisten, dass der Fanghaken um das Achsenelement nicht beliebig schwenken kann, sondern der Schwenkwinkel des Fanghakens begrenzt wird, wird es als vorteilhaft angesehen, wenn das Halteelement einen Schlitz aufweist, der einen Anschlag für die (schwerkraftbedingte) Schwenkbewegung des Fanghakens bildet. Durch das Begrenzen des Schwenkwinkels lässt sich vermeiden, dass der Fanghaken bei der Montage und/oder der Bedienung eine Fehlstellung einnehmen und zu einer Beschädigung führen kann.

Bei dem Achsenelement handelt es sich vorzugsweise um ein Rohr, das am Halteelement angebracht ist. Vorzugsweise ist das Rohr an dem Halteelement vernietet, und zwar besonders bevorzugt zwischen zwei parallel angeordneten Blechabschnitten des Halteelements.

Vorzugsweise umfasst die Fanghakeneinheit darüber hinaus ein Gegenstück, in das der Fanghaken einhaken kann und das zur ortsfesten Montage an einem ortsfesten Träger, insbesondere einer Wand, einem Gehäuse oder einem Behälter, geeignet ist.

Vorzugsweise ist das Gegenstück ein einteiliges, mehrfach gebogenes Blechbiegeteil. Wie bereits erwähnt, lassen sich Blechbiegeteile sehr kostengünstig herstellen.

Bezüglich des Zusammenwirkens zwischen dem Gegenstück und dem Fanghaken wird es als vorteilhaft angesehen, wenn ein Abschnitt des einteiligen Gegenstücks einen Einhakabschnitt zum Einhaken des Fanghakens bildet. Bei dem Einhakabschnitt handelt es sich bevorzugt um einen planen Blechabschnitt.

Vorzugsweise weist der Fanghaken einen Bedienhebel auf, der ein manuelles Verschwenken des Fanghakens erlaubt.

Der Bedienhebel ist vorzugsweise derart angeordnet, dass er bei Erreichen eines maximalen Bedienschwenkwinkels auf das Verschluss- oder Abdeckelement oder ein damit in Verbindung stehendes Zwischenelement stößt. Im Falle einer solchen Ausgestaltung bildet der Bedienhebel einen weiteren Anschlag zur Begrenzung des Schwenkwinkels des Fanghakens und trägt somit zusätzlich dazu bei, eine Fehlstellung des Fanghebels sowie Beschädigungen durch eine solche Fehlstellung zu vermeiden.

Mit Blick auf ein Verhindern einer Fehlstellung wird es insgesamt als besonders vorteilhaft angesehen, wenn ein Schlitz im Halteelement sowie der Bedienhebel im Zusammenwirken mit dem Verschluss- oder Abdeckelement gemeinsam zwei Anschläge bilden, die den maximalen Schwenkwinkel des Fanghakens um die Schwenkachse bzw. das erwähnte Rohr begrenzen.

Bezüglich der Fanghakenausgestaltung wird es darüber hinaus als vorteilhaft angesehen, wenn der Fanghaken einen ersten Hebelarm und einen zweiten Hebelarm aufweist. Der erste Hebelarm trägt bevorzugt einen Hakenabschnitt des Fanghakens, und der zweite Hebelarm bildet bevorzugt den Bedienhebel.

Vorzugsweise stehen der erste und zweite Hebelarm in einem Winkel zwischen 90 Grad und 180 Grad, besonders bevorzugt in einem Winkel zwischen 120 Grad und 140 Grad, zueinander.

Die Erfindung bezieht sich darüber hinaus auf ein Fahrzeug, insbesondere Schienenfahrzeug. Erfindungsgemäß ist bezüglich eines solchen Fahrzeugs vorgesehen, dass dieses mit einem Fanghaken, wie er oben beschrieben worden ist, bzw. einer Fanghakeneinheit, wie sie oben beschrieben worden ist, ausgestattet ist.

Bezüglich der Vorteile des erfindungsgemäßen Fahrzeugs sei auf die obigen Ausführungen im Zusammenhang mit dem erfindungsgemäßen Fanghaken und der erfindungsgemäßen Fanghakeneinheit verwiesen.

Bezüglich der Ausgestaltung des Fahrzeugs wird es als besonders vorteilhaft angesehen, wenn das Gegenstück der Fanghakeneinheit an einem fahrzeugseitigem Träger, insbesondere einer Fahrzeugwand, einer Rohbauwand, einer Verkleidungswand, einem Schrank oder einer Gerätewand eines Geräts des Fahrzeugs, angebracht ist, das Fahrzeug ein Verschluss- oder Abdeckelement aufweist, mit dem ein Abschnitt des Fahrzeugs, insbesondere eine Wandöffnung oder ein Gerät des Fahrzeugs, in der Verschlussstellung des Verschluss- oder Abdeckelements verschlossen oder abgedeckt wird, und die Halteeinrichtung der Fanghakeneinheit an dem Verschluss- oder Abdeckelement angebracht ist, und zwar derart, dass beim Öffnen oder Entnehmen des Verschluss- oder Abdeckelements der Fanghaken schwerkraftbedingt mit dem Gegenstück verhakt.

Das Verschluss- oder Abdeckelement bildet vorzugsweise eine Schürzenklappe oder einen Gerätedeckel, insbesondere einen Gerätedeckel eines Geräts des Fahrzeugs.

Die Erfindung wird nachfolgend anhand von Ausführungsbeispielen näher erläutert; dabei zeigen beispielhaft
- Figur 1: in einer dreidimensionalen Sicht schräg von der Seite einen Abschnitt eines Schienenfahrzeugs, der mit einer erfindungsgemäßen Fanghakeneinheit ausgestattet ist,
- Figur 2: die Fanghakeneinheit gemäß Figur 1 in einer dreidimensionalen Darstellung näher im Detail,
- Figur 3: in einem Querschnitt die Fanghakeneinheit gemäß den Figuren 1 und 2 bei einer geschlossenen Stellung eines mit der Fanghakeneinheit in Verbindung stehenden Verschluss- oder Abdeckelements des Schienenfahrzeugs gemäß Figur 1,
- Figur 4: einen verhakten Zustand der Fanghakeneinheit, bei dem ein Hakenabschnitt eines Fanghakens in einem Einhakabschnitt eines Gegenstücks einhakt,
- Figur 5: einen ausgehakten Zustand der Fanghakeneinheit nach einem Verschwenken des Fanghakens relativ zum Gegenstück und
- Figur 6: den Zustand der Fanghakeneinheit nach einer vollständigen Entnahme des Verschluss- oder Abdeckelements.

In den Figuren werden der Übersicht halber für identische oder vergleichbare Komponenten stets dieselben Bezugszeichen verwendet.

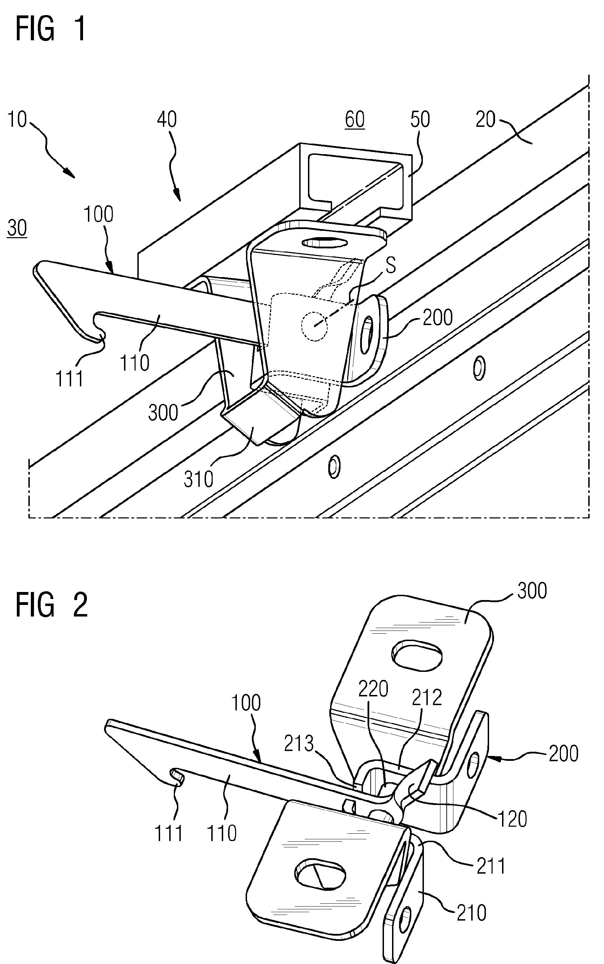

Die Figur 1 zeigt einen Abschnitt eines nicht näher dargestellten Schienenfahrzeugs 10. Man erkennt ein Verschluss- oder Abdeckelement 20, das ein Innenvolumen 30 im Schienenfahrzeug 10 nach außen hin verschließt. Bei dem Innenvolumen 30 kann es sich beispielsweise um das Innere eines Gehäuses, eines Behälters oder um einen Zwischenraum handeln, der von einem Verkleidungselement verdeckt oder verschlossen werden soll.

Um eine Entnahme des Verschluss- oder Abdeckelements 20 von seiner in der Figur 1 dargestellten geschlossenen Stellung zu erleichtern, insbesondere die Gefahr einer Beschädigung der Teile oder eine Verletzung des Bedienpersonals zu vermeiden oder zumindest zu reduzieren, ist eine Fanghakeneinheit 40 vorgesehen.

Die Fanghakeneinheit 40 umfasst einen Fanghaken 100, der schwenkbar um eine Schwenkachse S von einer Halteeinrichtung 200 der Fanghakeneinheit 40 gehalten wird. Die Halteeinrichtung 200 wird bei dem Ausführungsbeispiel gemäß Figur 1 von einer vorzugsweise horizontal angeordneten Schiene 50 gehalten, die wiederum an einem vorzugsweise horizontal angeordneten, fahrzeugseitigen Träger 60 befestigt ist.

Die Fanghakeneinheit 40 umfasst darüber hinaus ein Gegenstück 300, das mit dem Fanghaken 100 zusammenwirkt. Das Gegenstück 300 wird durch ein einteiliges, mehrfach gebogenes Blechbiegeteil gebildet, bei dem ein vorzugsweise abschnittsweise planer Blechabschnitt einen Einhakabschnitt 310 bildet. Der Einhakabschnitt 310 wirkt mit einem Hakenabschnitt 111 des Fanghakens 100 zusammen und ermöglicht es dem Fanghaken 100, in das Gegenstück 300 einzuhaken.

Der Einhakabschnitt 310 ist vorzugsweise schräg zur Horizontalen und schräg zur Vertikalen angeordnet. Vorzugsweise liegt der Winkel des Einhakabschnitts 310 relativ zur Horizontalen in einem Bereich zwischen 40° und 60°, insbesondere bei ca. 45°, und der Winkel relativ zur Vertikalen ebenfalls in einem Bereich zwischen 40° und 60°, insbesondere bei ca. 45°.

Die Figur 2 zeigt die Fanghakeneinheit 40 mit dem Fanghaken 100, der Halteeinrichtung 200 sowie dem Gegenstück 300 in einer dreidimensionalen Darstellung schräg von der Seite näher im Detail.

Es lässt sich erkennen, dass der Fanghaken 100 einen ersten Hebelarm 110 sowie einen zweiten Hebelarm 120 aufweist, der zu dem ersten Hebelarm 110 winklig angeordnet ist. Der Winkel zwischen den beiden Hebelarmen 110 und 120 liegt vorzugsweise in einem Bereich zwischen 90 und 180°, besonders bevorzugt in einem Winkelbereich zwischen 120° und 140°.

Der erste Hebelarm 110 des Fanghakens 100 ist mit dem Hakenabschnitt 111 versehen, der mit dem Einhakabschnitt 310 des Gegenstücks 300 (vgl. Figur 1) zusammenwirkt.

Der zweite Hebelarm 120 des Fanghakens 100 bildet einen Bedienhebel, der ein manuelles Verschwenken des Fanghakens 100 erlaubt, sobald das Verschluss- oder Abdeckelement 20 von der in der Figur 1 gezeigten geschlossenen Position geringfügig wegbewegt worden ist und eine Zugänglichkeit des Fanghakens 100 von außen erreicht ist.

Die beiden Hebelarme 110 und 120 drehen sich gemeinsam um die Schwenkachse S der Fanghakeneinheit 40.

Die Figur 2 zeigt darüber hinaus die Ausgestaltung der Halteeinrichtung 200 näher im Detail. Es lässt sich erkennen, dass die Halteeinrichtung 200 zweiteilig ausgestaltet ist und durch ein Halteelement 210 und ein Rohr 220 gebildet ist. Das Rohr 220 bildet die Schwenkachse S der Fanghakeneinheit 40 und wird zwischen zwei parallel angeordneten Blechabschnitten 211 und 212 des Halteelements 210 gehalten.

Mit Blick auf eine besonders einfache und kostengünstige Montage des Rohrs 220 wird es als vorteilhaft angesehen, wenn das Rohr 220 zwischen den beiden Blechabschnitten 211 und 212 vernietet ist bzw. durch eine Nietverbindung gehalten wird. Zur Herstellung der Nietverbindung wird bei der Montage vorzugsweise ein Niet durch das Innere des Rohrs 220 hindurch gezogen, wofür sich bekannte Nietzugwerkzeuge verwenden lassen.

In der Figur 2 lässt sich darüber hinaus erkennen, dass das Halteelement 210 mit einem Schlitz 213 ausgestattet ist, in den der Fanghaken 100 bzw. dessen erster Hebelarm 110 schwerkraftbedingt eintaucht. Die Tiefe des Schlitzes 213 begrenzt den Schwenkbereich des ersten Hebelarms 110 bzw. den Schwenkbereich des Fanghakens 100 nach unten, wenn dieser schwerkraftbedingt nach unten schwenkt.

Durch die Ausgestaltung des Halteelements 210 und insbesondere durch die Tiefe des Schlitzes 213 wird gewährleistet, dass der Fanghaken 100 in der geschlossenen Position des Verschluss- oder Abdeckelements 20 gemäß Figur 1 eine definierte Position einnimmt und von dem Gegenstück 300, insbesondere dem Einhakabschnitt 310, getrennt bleibt.

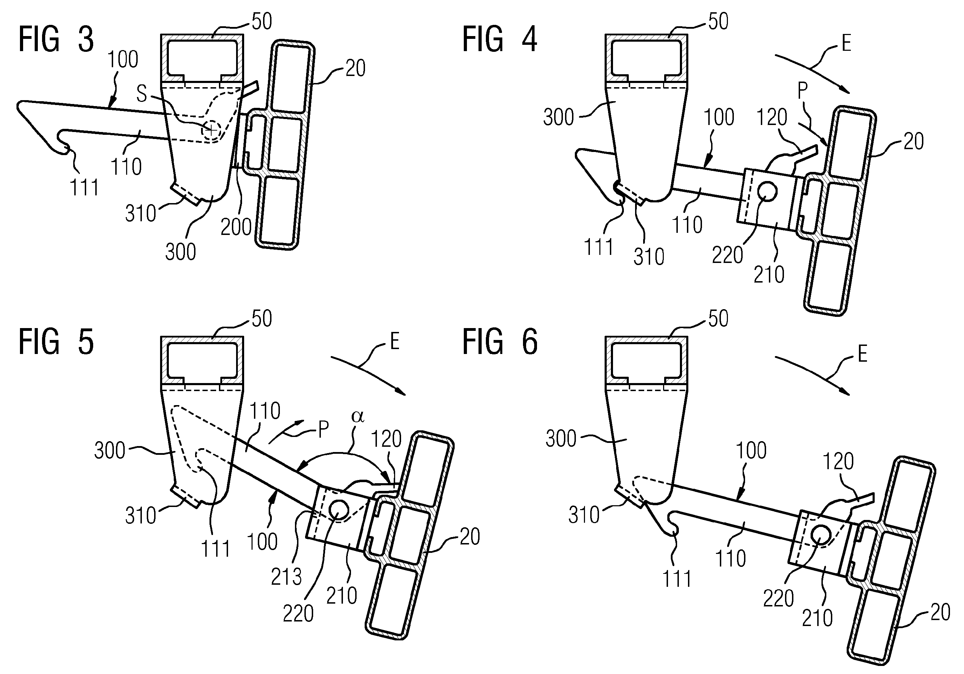

Im Zusammenhang mit den Figuren 3 bis 6 wird nachfolgend die Arbeitsweise der Fanghakeneinheit 40 gemäß den Figuren 1 und 2 näher beispielhaft erläutert:

Die Figur 3 zeigt die Stellung der Fanghakeneinheit 40 bzw. des Fanghakens 100 bei der geschlossenen Position des Verschluss- oder Abdeckelements 20, in der das Verschluss- oder Abdeckelement 20 das Innenvolumen 30 verschließt. Der Zustand der Fanghakeneinheit 40 gemäß Figur 3 entspricht somit dem Zustand der Fanghakeneinheit 40 bei der Darstellung gemäß Figur 1.

In der Figur 3 lässt sich erkennen, dass der erste Hebelarm 110 des Fanghakens 100 durch das Halteelement 210 von dem Gegenstück 300 und dem Einhakabschnitt 310 des Gegenstücks 300 getrennt bleibt.

Die Figur 4 zeigt den Zustand der Fanghakeneinheit 40 gemäß den Figuren 1 bis 3, nachdem das Verschluss- oder Abdeckelement 20 aus der in den Figuren 1 und 3 dargestellten geschlossenen Position entlang einer Entnahmerichtung E wegbewegt worden ist. Es lässt sich erkennen, dass beim Entnehmen des Verschluss- oder Abdeckelements 20 der Hakenabschnitt 111 des Fanghakens 100 mit dem Einhakabschnitt 310 des Gegenstücks 300 verhakt, so dass das Verschluss- oder Abdeckelement 20 von dem Fanghaken 100 gehalten wird und ein Herunterfallen des Verschluss- oder Abdeckelements 20 und damit ein Verletzen einer das Verschluss- oder Abdeckelement 20 abnehmenden Bedienperson zuverlässig verhindert wird.

In der Figur 4 lässt sich darüber hinaus erkennen, dass ein weiteres Entnehmen des Verschluss- oder Abdeckelements 20 entlang der Entnahmerichtung E erst möglich ist, wenn durch ein manuelles Bedienen und ein manuelles Verschwenken des Bedienhebels bzw. des zweiten Hebelarms 120 des Fanghakens 100 der Hakenabschnitt 111 durch Verschwenken entlang des Uhrzeigersinns bzw. der Pfeilrichtung P in Figur 4 vom Einhakabschnitt 310 des Gegenstücks 300 getrennt wird. Der maximale Schwenkwinkel, um den der Fanghaken 100 bzw. der erste Hebelarm 110 durch den zweiten Hebelarm 120 verschwenkt werden kann, wird durch das Zusammenwirken des zweiten Hebelarms 120 mit dem Verschluss- oder Abdeckelement 20 begrenzt. So lässt sich erkennen, dass bei einem Verschwenken des zweiten Hebelarms 120 entlang der Pfeilrichtung P der zweite Hebelarm auf das Verschluss- oder Abdeckelement 20 stoßen wird, wodurch der maximale Schwenkwinkel des Fanghakens 100 entlang der Pfeilrichtung P begrenzt wird.

Die Figur 5 zeigt den Zustand der Fanghakeneinheit 40 gemäß den Figuren 1 bis 4, nachdem durch ein manuelles Verschwenken des zweiten Hebelarms 120 um die Schwenkachse S bzw. um das Rohr 220 der Halteeinrichtung 200 der Hakenabschnitt 111 von dem Einhakabschnitt 310 des Gegenstücks 300 getrennt worden ist und eine vollständige Entnahme des Verschluss- oder Abdeckelements 20 gewährleistet worden ist.

Die Figur 5 zeigt darüber hinaus, dass das Verschluss- oder Abdeckelement 20 einen Anschlag für den zweiten Hebelarm 120 bzw. den Bedienhebel bildet, wodurch der Verschwenkwinkel des Fanghakens 100 relativ zum Verschluss- oder Abdeckelement 20 begrenzt wird.

In der Figur 5 ist mit dem Bezugszeichen α der Winkel bezeichnet, den der erste Hebelarm 110 relativ zu dem zweiten Hebelarm 120 - bezogen auf die Schwenkachse S bzw. das Rohr 220 - relativ zueinander aufweist. Der Winkel α liegt vorzugsweise in einem Bereich zwischen 120 und 140 Grad.

Die Figur 6 zeigt den Zustand des Verschluss- oder Abdeckelements 20 sowie den Zustand der Fanghakeneinheit 40 gemäß den Figuren 1 bis 5, nachdem das Verschluss- oder Abdeckelement 20 vollständig von dem Gegenstück 300 getrennt worden ist. Es lässt sich erkennen, dass ein schwerkraftbedingtes Verschwenken des ersten Hebelarms 110 nach unten bzw. entgegen dem Uhrzeigersinn durch das Halteelement 210 bzw. dem in der Figur 2 dargestellten Schlitz 213 des Halteelements 210 begrenzt wird. Ein Herunterfallen des ersten Hebelarms 110 bzw. ein Verschwenken des gesamten Fanghakens 100 entgegen dem Uhrzeigersinn wird also begrenzt.

Zusammengefasst bilden der Schlitz 213 im Halteelement 210 sowie das Verschluss- oder Abdeckelement 20 zwei Anschläge, die den maximalen Schwenkwinkel des Fanghakens 100 um die Schwenkachse S bzw. das Rohr 220 begrenzen. Eine Fehlstellung des Fanghakens 100, die eine Montage des Verschluss- oder Abdeckelements 200 erschweren oder verhindern könnte, wird durch die Ausgestaltung des Schlitzes 213 sowie die Anordnung des zweiten Hebelarms 120 bzw. des Bedienhebels bei der Fanghakeneinheit 40 gemäß den Figuren 1 bis 6 zuverlässig verhindert.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Fanghaken (100) für ein bewegliches Teil, insbesondere ein Verschluss- oder Abdeckelement (20),
**dadurch gekennzeichnet, dass**
der Fanghaken (100) ein Blechbiegeteil ist.

2. Fanghakeneinheit (40),
**dadurch gekennzeichnet, dass**
- die Fanghakeneinheit (40) einen Fanghaken (100) nach Anspruch 1 sowie eine Halteeinrichtung (200) aufweist, die zur Montage an einem beweglichen Teil, insbesondere einem Verschluss- oder Abdeckelement (20), geeignet ist, und
- der Fanghaken (100) von der Halteeinrichtung (200) schwenkbar gehalten wird.

3. Fanghakeneinheit (40) nach Anspruch 2,
**dadurch gekennzeichnet, dass**
der Fanghaken (100) von der Halteeinrichtung (200) derart schwenkbar gehalten wird, dass er allein schwerkraftbedingt eine zum Einhaken in ein Gegenstück (300) der Fanghakeneinheit (40) geeignete Fangstellung einnimmt.

4. Fanghakeneinheit (40) nach einem der voranstehenden Ansprüche 2-3,
**dadurch gekennzeichnet, dass**
die Halteeinrichtung (200) ein zur Montage an dem beweglichen Teil geeignetes Halteelement (210) und ein an dem Halteelement (210) angebrachtes Achsenelement aufweist, das eine Schwenkachse für den Fanghaken (100) bildet.

5. Fanghakeneinheit (40) nach Anspruch 4,
**dadurch gekennzeichnet, dass**
- das Halteelement (210) ein mehrfach gebogenes Blechbiegeteil ist und/oder
- einen Schlitz (213) aufweist, der einen Anschlag für die maximale Schwenkbewegung des Fanghakens (100) bildet.

6. Fanghakeneinheit (40) nach einem der voranstehenden Ansprüche 4-5,
**dadurch gekennzeichnet, dass**
das Achsenelement ein Rohr (220) ist.

7. Fanghakeneinheit (40) nach Anspruch 6,
**dadurch gekennzeichnet, dass**
das Rohr (220) an dem Halteelement (210) vernietet ist, und zwar insbesondere zwischen zwei parallel angeordneten Blechabschnitten (211, 212) des Halteelements.

8. Fanghakeneinheit (40) nach einem der voranstehenden Ansprüche 2 bis 7,
**dadurch gekennzeichnet, dass**
die Fanghakeneinheit (40) ein Gegenstück (300) umfasst, in das der Fanghaken (100) einhaken kann und das zur ortsfesten Montage an einem ortsfesten Träger, insbesondere einer Wand, einem Gehäuse oder einem Behälter, geeignet ist.

9. Fanghakeneinheit (40) nach Anspruch 8,
**dadurch gekennzeichnet, dass**
das Gegenstück (300) ein einteiliges, mehrfach gebogenes Blechbiegeteil ist.

10. Fanghakeneinheit (40) nach Anspruch 9,
**dadurch gekennzeichnet, dass**
ein Abschnitt des einteiligen Gegenstücks einen Einhakabschnitt (111) zum Einhaken des Fanghakens (100) bildet.

11. Fanghakeneinheit (40) nach einem der voranstehenden Ansprüche 2 bis 10,
**dadurch gekennzeichnet, dass**
der Fanghaken (100) einen Bedienhebel aufweist, der ein manuelles Verschwenken des Fanghakens (100) erlaubt und außerdem derart angeordnet ist, dass er bei Erreichen eines maximalen Schwenkwinkels des Fanghakens (100) auf das Verschluss- oder Abdeckelement (20) oder ein damit in Verbindung stehendes Zwischenelement stößt.

12. Fanghakeneinheit (40) nach einem der voranstehenden Ansprüche 2 bis 11,
**dadurch gekennzeichnet, dass**
- der Fanghaken (100) einen ersten Hebelarm (110) und einen zweiten Hebelarm (120) aufweist,
- der erste Hebelarm (110) einen Hakenabschnitt (111) des Fanghakens (100) trägt und
- der zweite Hebelarm (120) den Bedienhebel bildet.

13. Fanghakeneinheit (40) nach Anspruch 12,
**dadurch gekennzeichnet, dass**
der erste und zweite Hebelarm (110, 120) in einem Winkel, bezogen auf die Schwenkachse, zwischen 90 Grad und 180 Grad, bevorzugt einem Winkel zwischen 120 Grad und 140 Grad, zueinander stehen.

14. Fahrzeug, insbesondere Schienenfahrzeug (10),
**dadurch gekennzeichnet, dass**
das Fahrzeug mit einem Fanghaken (100) nach Anspruch 1 oder einer Fanghakeneinheit (40) nach einem der voranstehenden Ansprüche 2 bis 10 ausgestattet ist.

15. Fahrzeug nach Anspruch 14,
**dadurch gekennzeichnet, dass**
- das Gegenstück (300) der Fanghakeneinheit (40) an einem fahrzeugseitigem Träger, insbesondere einer Fahrzeugwand, einer Rohbauwand, einer Verkleidungswand, einem Schrank oder einer Gerätewand eines Geräts des Fahrzeugs, angebracht ist,
- das Fahrzeug ein Verschluss- oder Abdeckelement (20) aufweist, mit dem ein Abschnitt des Fahrzeugs, insbesondere eine Wandöffnung oder ein Gerät des Fahrzeugs, in der Verschlussstellung des Verschluss- oder Abdeckelements (20) verschlossen oder abgedeckt wird, und
- die Halteeinrichtung (200) der Fanghakeneinheit (40) an dem Verschluss- oder Abdeckelement (20) angebracht ist, und zwar derart, dass beim Öffnen oder Entnehmen des Verschluss- oder Abdeckelements (20) der Fanghaken (100) schwerkraftbedingt mit dem Gegenstück (300) verhakt.
